Europäisches Patentamt

(19) **European Patent Office**

Office européen des brevets

(11) Publication number: **0 137 628**
**A1**

# (12) EUROPEAN PATENT APPLICATION

(21) Application number: **84305445.3**

(22) Date of filing: **09.08.84**

(51) Int. Cl.⁴: **E 01 F 9/01**

(30) Priority: **26.08.83 GB 8323079**

(43) Date of publication of application:
**17.04.85 Bulletin 85/16**

(84) Designated Contracting States:
**DE FR GB IT**

(71) Applicant: **NATIONAL RESEARCH DEVELOPMENT CORPORATION**
**101 Newington Causeway**
**London SE1 6BU(GB)**

(72) Inventor: **Barnard, Byron George**
**15 Lowther Road Barnes**
**London SW13(GB)**

(74) Representative: **Wildman, David Brian et al,**
**Procurement Executive Ministry of Defence Patents**
**1A(4), Room 2014 Empress State Building Lillie Road**
**London SW6 1TR(GB)**

(54) **Collapsible hazard warning marker.**

(57) A hazard warning marker in the form of a tetrahedron, which may carry reflective material (2), and is collapsible to a flat condition. Of the four triangular faces a first two (PXY, QXY) have hinged connections along all three edges to each other face, while the remaining two (PQX, PQY) have hinged connections to other faces only along two (PX, QX; PY, QY) of their three edges, the remaining edges (PQ) being unconnected. These remaining portions can each be folded in half along respective lines (AX; CY) joinging the mid-point (AB; CD) of the common edge (PQ) to the opposite corner (X; Y) of the triangular face. Resilient biasing means (4) may be provided for urging the marker from a flat condition to an erect condition. The marker may be formed from a unitary rectangular blank (1).

EP 0 137 628 A1

## A collapsible hazard warning marker

This invention relates to hazard warning markers which are placed on or by a road either singly or in groups to designate to other road users hazards such as accidents, vehicles which have broken down, road works etc. The most commonly used markers are either cones or triangles and these shapes have come to be recognised by the motorist as a warning sign. Hazard warning markers must necessarily be comparatively large objects to enable them to be visibly recognised at a distance. Their bulky size makes such markers difficult and inconvenient to store especially so in vehicles which normally have only limited capacity for storage. This problem is not only of concern to the private motorist but especially acute in the case of the police or other highway authorities, who need to store and transport a large number of these bulky warning markers.

Attempts have previously been made to alleviate this problem by the provision of cones which nest one inside another. Although some improvement, the space taken up by a stack of such cones is still considerable. Also known are cones which are formed of strip-like material, the cones being collapsible by downward pressure on the top of the cone. An example of this type of collapsible cone is described in GB-203199B.

Warning triangles are known which comprise three arms which can be connected together to form the visual triangular display and a set of legs against which the triangle leans. Markers such as this are able to be dismantled and stored in a flat condition but they suffer from the disadvantage that they are clumsy and difficult to assemble. In addition such triangles do not form very stable structures and their field of use is therefore restricted to the private motorist who requires a warning marker for occasional emergencies.

In GB-2049767B there is disclosed a warning marker in the form of a collapsible pyramid having a square open base and four similar triangular walls. The four triangular sides are hinged together, and can be collapsed into a flat condition. A resilient link member positioned across a diagonal of the base urges the marker to adopt an erect pyramidal form when released. This marker can thus alleviate many of the aforesaid problems. However, in many circumstances it is necessary to deploy a marker very quickly, in large numbers, and/or from a moving vehicle. In this event the prior art marker according to GB-2049767B is not suitable, because of the necessity that it should be carefully placed to ensure that it rests on its open base.

It is an object of the present invention to provide a collapsible hazard warning marker which is quick and easy to erect, which is suitable for use by both the private motorist and the highway authorities, and which can easily and quickly be deployed, eg from a moving vehicle.

Accordingly there is provided a hazard warning marker collapsible to a flat condition and including means for holding the marker in an erect condition in which it forms a tetrahedron, said means being releasable to permit repeated collapse and erection of the marker.

The tetrahedral shape has three intrinsic advantages. Firstly it is a stable structure with a low centre of gravity and backwardly sloping faces. Hence the marker will be relatively unaffected by winds. Secondly each face is triangular - a presently recognised warning symbol. Thirdly, being a regular structure, the tetrahedron may be stood on any of its four faces whilst still presenting triangular indicia through $360^{\circ}$.

The marker preferably comprises four triangular portions, a first two of which are hingeably connected along all three edges to edges of other of the triangular portions, the remaining two portions being hingeably connected along two of their three edges to remaining edges of other of the triangular portions, the said remaining two portions being unconnected one to the other along the common edge therebetween, the said remaining two portions each being hingeable about a line joining the mid point of the said common edge to the opposite corner of the triangle.

Conveniently each of the triangular portions is in the form of an equilateral triangle.

The means for holding the marker in an erect condition conveniently comprises a resilient biasing member which acts to urge the marker to adopt its tetrahedral form. A hazard warning marker of this type will consequently possess the advantage of being self-erecting in character. This will serve to more readily prepare the marker for deployment and additionally obviate the problem of incorrect assembly possible with some prior art markers previously described. Furthermore the combination of the self-erecting nature of the marker along with its regular tetrahedral shape allows the marker to be remotely deployed in hazardous situations. In the case of roads with heavy or fast moving traffic or in the region of toxic or inflammable materials it is undesirable to have a person individually placing each warning marker in position. As it is immaterial which of the four faces of the present marker act as a base, warning markers according to the present invention may be tossed into position from a safe place a small distance away from the 'danger area'. It is foreseen that a carriageway of a busy road may be closed to traffic by a plurality of such warning markers deployed from a slowly moving vehicle. The dangerous job of a person placing markers in heavy traffic is thereby relieved.

The resilient biasing member may conveniently be formed of an elastomeric material. Alternatively the resilient biasing member comprises a spring such as a coil spring. In one arrangement the resilient biasing member is connected between the first two triangular portions and acts so as to urge the two said portions to pivot away one from the other. Alternatively the resilient biasing member is connected between the said remaining two triangular portions. In this case the biasing member acts so as to urge the said two portions towards one another so that each pivots about its said hingeable line until the two portions meet at the common edge to form a tetrahedron.

In yet another alternative arrangement the resilient biasing member comprises a leaf spring. The leaf spring is conveniently located across one of the hingeably connected edges of the triangular portions. It is conceivable that more than one leaf spring may be usefully employed

The hazard warning marker is preferably formed of a plastics material, especially polypropylene. Polypropylene is most suitable as it is a rigid material and yet able to hinge repeatedly once folded. The requirement for several separate hinges is thereby removed. The hazard warning marker may conveniently be formed from a unitary rectangular blank. A rectangular flat-sheet of polypropylene may be scored, hot pressed or otherwise manufactured to produce the required hingeable edges and folded to form a tetrahedral warning marker.

4

One or more externally disposed faces of the hazard warning marker conveniently carry a reflective material. This enhances the visibility of the marker, especially at night. Alternatively or additionally a variety of displays and designs may be applied to faces of the marker including conventional road signs and written indicia.

Embodiments of the invention will now be more particularly described, by way of example only, with reference to the drawings in which,

Figure 1 is plan view of a blank form which a hazard warning marker according to the present invention may be constructed.

Figure 2 is a perspective view of a hazard warning marker according to the present invention when in an erect condition, and

Figure 3 is a perspective view of the hazard warning marker of Figure 2 shown when in a semi collpased condition.

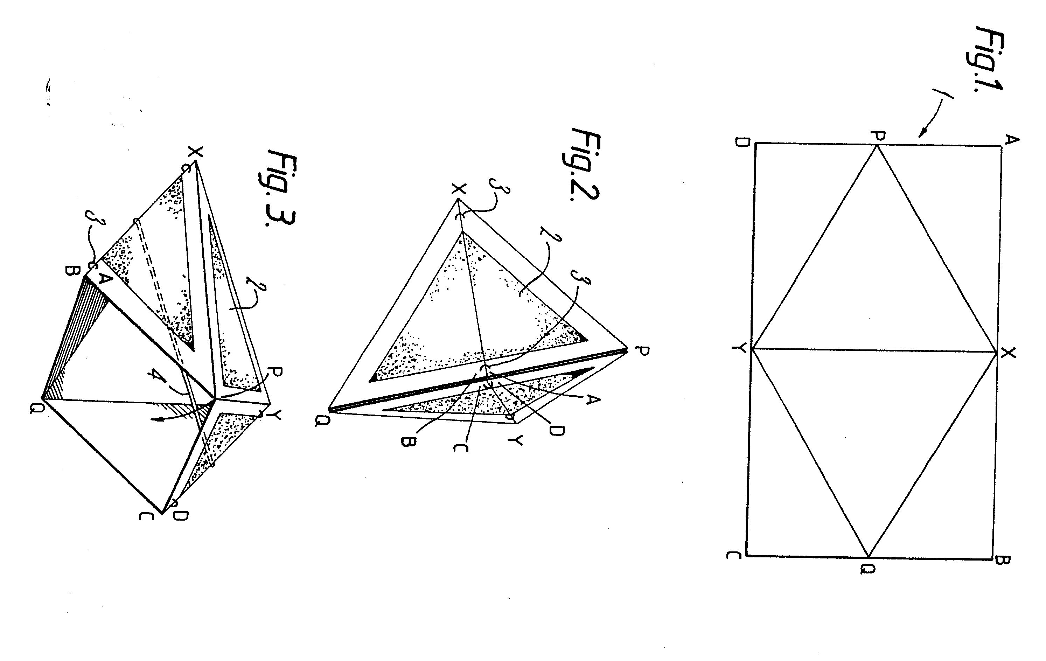

Referring to Figure 1, there is shown a blank 1, typically of polypropylene, from which a hazard warning marker according to the present invention may be constructed. The blank is rectangular in shape with its four corners designated A B C and D respectively such that A B and C D are the longer edges of the rectangle and A D and B C the shorter edges thereof. The blank is scored along a line joining the mid points X and Y of the two longer edges such that the blank is hingeable along its centre line X Y. In addition, the blank is scored along lines joining the mid points P and Q of the shorter edges to mid points X and Y to form two equilateral triangles X Y P and X Y Q.

To prepare the marker for assembly, the blank is folded about its centre line X Y such that the edges A X and B X and edges D Y and C Y lie adjacent one another. These adjacent edges are then hingeably secured one to the other by means to be presently described.

The marker may be erected into the tetrahedral form shown in Figure 2 by urging corners A/B and C/D toward one another, forcing mid points P and Q away one from the other and causing the marker to hinge along its scored lines. The marker thereby forms a tetrahedron having four triangular faces, PQX, PQY, PXY, and QXY respectively, any of which may form a base on which the marker stands. Retoreflective material as shown at 2, is attached to the four triangular faces to make the warning marker more easily visible.

The adjacent edges AX and BX and also DY and CY are hingeably connected one to another by means of small rings 3, typically of metal or nylon. The rings 3 secure the edges one to the other whilst permitting hinging along the joint therebetween. the marker may additionally have some fastening means such as hooks and eyes (not shown) such that the two adjacent edges PABQ and PDCQ may be secured one to the other to maintain the marker in its tetrahedral form. Alternatively each of the two edges may be provided with a strip of Velcro (Trade Mark) such that the edges are releasably secured one to the other once they come into mutual contact.

Figure 3 shows a hazard warning marker in a semi collapsed state, some way between the fully erect tetrahedron of Figure 2 and its collapsed, flat position. The tetrahedron is collapsed by downward pressure on corner P which forces apart the points A/B and C/D causing triangles PQX and PQY to hinge along their centre lines XA and YC respectively. When point P is pushed all the way down to meet Q, the two triangles PQX and PQY are folded flat along their respective centre lines and the marker is completely collapsed flat. Figure 3 also shows an elastomeric strip 4 constituting a resilient biasing member which acts to urge the marker to adopt its tetrahedral form. The elastomeric strip 4 is stretched across between triangles PQX and PQY and is attached to each triangle at one point on either side of each centre line XA and YC respectively. Indeed the strip 4 may conveniently replace one of the rings 3 which act to secure the adjacent edges one to another.

The strip acts to try and pull the two triangles PQX and PQY towards one another, thereby erecting the tetrahedron. The marker is therefore self-erecting in that no additional force is required to manipulate the marker from its flat condition to its tetrahedral form.

6

It will be appreciated that various alternative mechanisms for providing the resilient bias may be employed without departing from the scope of the present invention. The elastomeric strip 4 may be replaced by a spring, such as a coil spring. Alternatively leaf springs may be located across one or more of the hingeable edges to provide the biasing force for a self-erecting tetrahedron. It will be apparent to those skilled in the art that a variety of alternative hinges and springs may be employed.

0137628

JX/6503/EPO

Claims

1. A hazard warning marker collapsible to a flat condition and including means for holding the marker in an erect condition, said means being releasable to permit repeated collapses and erection of the marker, characterised in that when erect the marker is in the form of a tetrahedron.

2. A hazard warning marker according to claim 1, characterised in that it comprises four triangular portions, a first two (PXY, QXY) of which are hingeably connected along all three edges to edges of other of the triangular portions, the remaining two portions (PQX, PQY) being hingeably connected along two (PX,PY; QX, QY) of their three edges to remaining edges of other of the triangular portions, the said remaining two portions being unconnected one to the other along the common edge (PQ) therebetween, the said remaining two portions being hingeable along a line (AX; CY) joining the mid-point (AB; CD) of the said common edge to the opposite corner (X; Y) of the triangle.

3. A hazard warning marker according to claim 2 characterised in that each of the triangular portions is in the form of an equilateral triangle.

4. A hazard warning marker according to any of claim 1 to 3 characterised in that the means for holding the marker in an erect condition comprises a resilient biasing member (4) which acts to urge the marker to adopt its tetrahedral form.

5. A hazard warning marker according to claim 4 characterised in that the resilient biasing member (4) is formed of an elastomeric material.

6. A hazard warning marker according to claim 4 characterised in that the resilient biasing member comprises a coil spring.

7. A hazard warning marker according to claim 4 characterised in that the resilient biasing member comprises a leaf spring.

8. A hazard warning marker according to any preceding claim characterised in that it is formed of a plastics material.

9. A hazard warning marker according to claim 8 characterised in that the plastics material is polypropylene.

10. A hazard warning marker according to any preceding claim characterised in that the four faces of the tetrahedron are formed from a unitary rectangular blank.

11. A hazard warning marker according to any preceding claim characterised in that one or more externally disposed faces of the marker carry a reflective material (2).

Fig.1.

Fig.2.

Fig.3.

0137628

1/1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-U-1 915 945 (ZELLSTOFFFABRIK WALDHOF) * Page 5, last paragraph - page 7, paragraph 2; figures 1-7 * | 1-5,10 | E 01 F 9/01 |
| X | GB-A-1 362 523 (SCOVILL MANUFACTURING CO.) * Complete document * | 1,8 | |
| X | DE-A-3 124 339 (MÜLLER) * Complete document * | 1,8 | |
| X | DE-U-1 871 122 (LANGREHR) * Complete document * | 1,8 | |
| X | DE-U-1 919 553 (KLINGELE PAPIERWERKE KG.) * Complete document * | 1 | TECHNICAL FIELDS SEARCHED (Int. Cl.4) |
| D,A | GB-A-2 049 767 (WARNING PYRAMIDS LTD.) * Page 1, line 34 - page 3, line 34 * | 1,4,5, 8 | E 01 F 9/00 |
| A | DE-U-1 931 548 (ROSENSTOCK) * Complete document * | 1,4,6, 8 | |
| A | GB-A-2 027 780 (GLASDON LTD.) * Page 2, lines 1-34 * | 1,11 | |

The present search report has been drawn up for all claims

| Place of search BERLIN | Date of completion of the search 22-11-1984 | Examiner PAETZEL H-J |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82